# EUROPÄISCHE PATENTSCHRIFT

(11) **EP 0 494 446 B1**
(45) Veröffentlichungstag und Bekanntmachung des Hinweises auf die Patenterteilung: **11.05.1994**
(21) Anmeldenummer: 91122188.5
(22) Anmeldetag: 23.12.1991
(51) Int. Cl.: F16C 19/52, H02K 5/173

(54) **Elektrisch isoliertes Wälzlager**
Electric isolated antifriction bearing
Palier à roulement isolé anti-énergie électrique

(30) Priorität: 11.01.1991 DE 4100587
(43) Veröffentlichungstag der Anmeldung: 15.07.1992
(73) Patentinhaber: SKF GmbH, D-97419 Schweinfurt (DE)
(72) Erfinder: Köttritsch, Hubert, A-3300 Amstetten (DE); Kure, Gottfried, A-4050 Traun (DE)

(56) Entgegenhaltungen:
- DE-A- 3 741 678
- DE-U- 8 029 066
- FR-A- 2 626 632
- FR-A- 2 653 191
- SOVIET INVENTIONS ILLUSTRATED, EL section, week E 33, September 29, 1982, Derwent Publications Ltd., London, SU-875 514 (Kiev Civil Aviation)

## Beschreibung

Die Erfindung betrifft ein elektrisch isoliertes Wälzlager, bei dem mindestens ein Lagerring auf seiner Sitzfläche und wenigstens auf den zur Anlage an benachbarten metallischen Teilen gelangenden Bereichen seiner Seitenflächen mit einer Isolationsschicht versehen ist.

In verschiedenen Anwendungsbereichen, z. B. bei elektrischen Maschinen und elektrischen Schienenfahrzeugen besteht häufig die Notwendigkeit, die zur Lagerung drehbarer Teile eingesetzten Wälzlager elektrisch gegen das Maschinengehäuse, das Fahrgestell des Schienenfahrzeugs o.ä. zu isolieren. Dadurch soll verhindert werden, daß elektrischer Strom über die Lagerringe und Wälzkörper fließt, wenn - z. B. bei elektrischen Maschinen - eine unerwünschte Spannung zwischen Lagergehäuse und einer im Wälzlager gelagerten Welle anliegt oder wenn - z. B. bei elektrischen, über eine Fahrleitung mit Strom versorgten Schienenfahrzeugen - der Strom über den Fahrzeugkörper und das Fahrgestell, die Radachsen, Erdungskontakte und Räder zur Schiene geleitet wird. Auch bei mit dem Triebfahrzeug verbundenen Wagen oder Fahrzeugen mit eigener elektrischer Energieversorgung könnten bei fehlender Lagerisolierung Ströme durch die Radlager fließen.

Eine Stromführung durch das Wälzlager muß verhindert werden, weil sich an den Kontaktflächen zwischen den Lagerringen und den Wälzkörpern zusammen mit dem Schmierstoff elektrokorrosive Vorgänge abspielen würden, die zu Stromschäden, d. h. zu Veränderungen der Oberflächen durch Krater- und Riffelbildung führen würden. Die Folge davon wären frühzeitige Lagerschäden und Lagerausfälle.

Es sind deshalb schon verschiedene Maßnahmen ergriffen worden, um auf der Sitzfläche zumindest eines Lagerringes des Wälzlagers sowie wenigstens auf den zur Anlage an benachbarten metallischen Teilen gelangenden Bereichen seiner Stirnflächen elektrische Isolierungen anzuordnen. Eine solche Maßnahme ist z. B. aus dem DE-GM 80 29 066 bekannt, gemäß der eine isolierende Keramikschicht oder Aluminiumoxidschicht durch Flammspritzen unmittelbar auf den Lagerring aufgetragen wird. Mit Verfahren dieser Art können Schichten mit Isolationswerten von ca. 200 V Gleichspannung und darüber erreicht werden. Daneben ist es aber auch bekannt, Oxidkeramikschichten durch Plasmaspritzen aufzutragen, wodurch Isolationswerte von ca. 500 V Gleichspannung und darüber erreicht werden können.

Isolationswerte dieser Größenordnung sind bei vielen elektrischen Maschinen erwünscht. Bei Radsatzlagern von Schienenfahrzeugen sind Maßnahmen zur Vermeidung von Stromschäden besonders wichtig, weil einerseits diese Lager mechanisch sehr hoch beansprucht werden und andererseits die Sicherheit eine besonders große Rolle spielt; es muß deshalb ausgeschlossen werden, daß die Lebensdauer der Radsatzlager durch elektrokorrosive Einflüsse verringert werden kann.

Wird aber durch außergewöhnliche Umstände der im Normalfall gut leitende, das isolierte Lager umgehende Strompfad unterbrochen, so kann an den metallischen Teilen der Maschine oder des Fahrzeugs eine zu hohe, für den Menschen gefährliche Berührungsspannung anliegen. Das kann etwa dann der Fall sein, wenn eine Erdungsleitung eines Maschinengehäuses unterbrochen wird und/oder bei einem elektrischen Schienenfahrzeug der das Rad mit dem Fahrgestell leitend verbindende Erdungskontakt ausfällt. Es ist deshalb üblich, einen Schutzwiderstand in Reihe mit dem Radsatzlager und parallel zur Isolierung anzuordnen, der die Isolierung überbrückt und den Reihenwiderstand der Lagerung erhöht (DIN VDE-Vorschrift 0123 "Stromführung im Bereich von Radsatz-Wälzlagern in Schienenfahrzeugen"), sodaß im Schadensfalle der Strom über den Schutzwiderstand und das Lager fließt. Die Größe des Schutzwiderstands bestimmt dann die Höhe der Berührungsspannung am Fahrgestell und Fahrzeugkörper, Maschinengehäuse o.ä.

Bei Lagerungsanordnungen, bei denen die Isolierung durch unmittelbare Beschichtung eines Lagerringes mit Isoliermaterial bewirkt wird, ist es aber sehr schwierig, einen Schutzwiderstand anzuschließen. Man hat deshalb solche Lagerringe auch schon mit einer Isolierschicht mit genau definiertem Widerstandswert versehen, der demjenigen eines Schutzwiderstandes entspricht, so daß - ohne gesonderten Schutzwiderstand - der Strom im Schadensfalle über die Isolierschicht fließen konnte. Bei einer solchen Ausführung darf die Isolierschicht aber nur einen vergleichsweise geringen Isolationswert aufweisen (z. B. DurchschIagsspannung 40 bis 80 V Gleichspannung), und die Schichtdicke muß darüberhinaus eng toleriert werden, um die Durchschlagspannung zu gewährleisten. Lager dieser Art sind demzufolge in der Herstellung teuer und können Anforderungen an hohe Isolationswerte nicht erfüllen.

Der Erfindung liegt die Aufgabe zugrunde, ein Wälzlager zu schaffen, das einerseits mit einer Isolationsschicht mit hohem Isolationswiderstand versehen ist, andererseits aber eine Umgehung der Isolationsschicht auf einem Wege vergleichsweise geringen Widerstandes ermöglicht.

Diese Aufgabe wird erfindungsgemäß dadurch gelöst, daß der Lagerring eine die Isolationsschicht durchdringende Ausnehmung zum Einsetzen eines aus einem im Vergleich zur Isolationsschicht elektrisch leitfähigerem Material bestehenden Teiles aufweist.

Die Vorteile der Erfindung bestehen insbesondere darin, daß das Wälzlager, bzw. dessen Lagerring, mit einer einheitlichen gleichmäßigen Beschichtung hohen Isolationswiderstandes versehen und dennoch jeder gewünschte Spannungswert für eine Überbrückung der Isolationsschicht eingestellt werden kann, indem ein z. B. stiftförmiges Teil mit entsprechendem Widerstandswert oder entsprechendem an den Stift angeschlossenen, die Schutzfunktion ausübenden elektrischen Bauelement in den Lagerring eingesetzt wird. Ein und dasselbe Lager kann auf diese Weise mit Schutzelementen verschiedener elektrischer Größe für unterschiedliche Spannungs-Schwellenwerte versehen werden. Die Herstellung des beschichteten Lagerringes ist zudem problemlos und ohne nachträgliche Prüfung enger Grenzwerte des Isolationswiderstandes möglich, weil keine engen Toleranzen für die Schichtdicke einzuhalten sind. Die Ausschußquote ist dementsprechend gering.

Gemäß den Unteransprüchen kann der Stift mit einer Isolationsschicht versehen sein, deren Widerstandswert demjenigen eines definierten Schutzwiderstandes entspricht, so daß im Schadensfalle der Strom über die Isolationsschicht des Stiftes zum Lager fließen kann. Der Stift kann aber auch über einen elektrischen Anschluß mit einem Schutzwiderstand oder einem anderen elektrischen Bauelement (z. B. einem durch eine Grenzspannung triggerbaren Schalter) verbunden sein und selbst nur als Kontaktgeber dienen. Schließlich kann der Stift selbst auch aus einem Material mit definiertem Widerstandswert bestehen, so daß er, im eingebauten Zustand des Lagers an einer Metallfläche der Lagerumgebung anliegend, selbst als Schutzwiderstand wirkt.

Zusätzlich kann der Stift, sofern er als aus dem Lagerring herausragendes Bauteil ausgestaltet ist, auch noch die Aufgabe einer Verdrehsicherung für den Lagerring übernehmen. Hierzu muß lediglich im Lagergehäuse (wenn es sich um den Lageraußenring handelt) bzw. in der Lager-Anlagefläche der Achse oder Welle (wenn es sich um den Lagerinnenring handelt) eine entsprechende Ausnehmung für den herausragenden Teil des Stiftes vorgesehen sein.
Bei dem als Stift bezeichneten Teil kann es sich selbstverständlich auch um ein Teil anderer Bauform handeln, das in eine entsprechend gestaltete Ausnehmung im Lagerring einsetzbar ist.
Ausführungsbeispiele der Erfindung sind in den Figuren dargestellt und werden nachfolgend näher beschrieben.

Es zeigen:
- Figur 1: Eine Schnittdarstellung eines erfindungsgemäßen Lagers,
- Figur 2: ein zweites Ausführungsbeispiel und
- Figur 3: ein weiteres Ausführungsbeispiel der Erfindung.

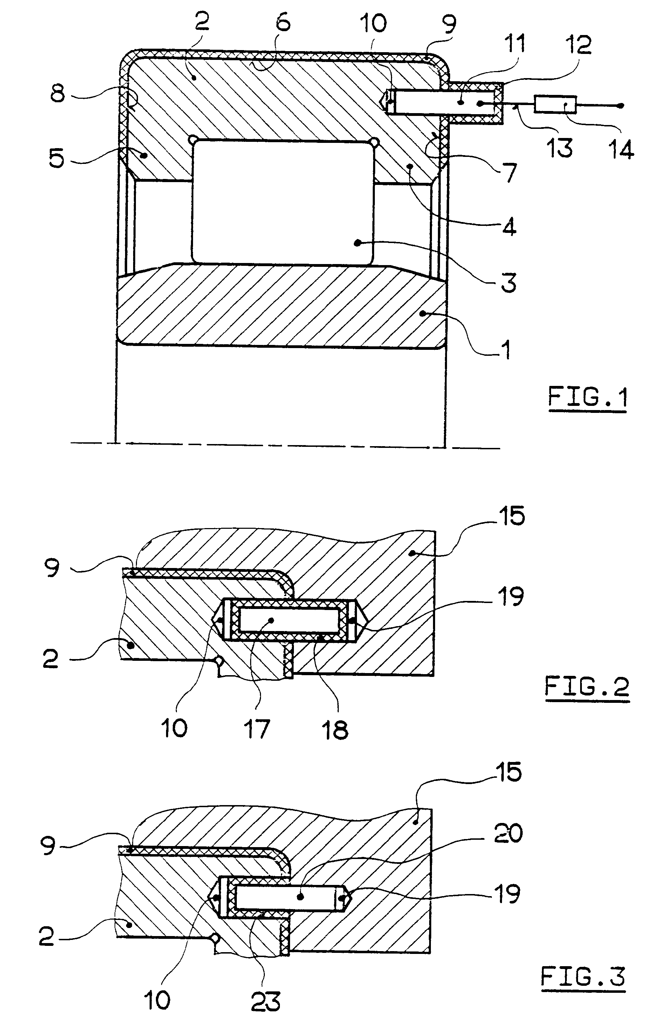

In Figur 1 ist ein Zylinderrollenlager im Halbschnitt dargestellt , das einen Lagerinnenring 1, einen Lageraußenring 2 und dazwischen angeordnete Zylinderrollen 3 aufweist. Die Zylinderrollen 3 werden zwischen Borden 4, 5 des Lageraußenringes 2 axial geführt.

Der Lageraußenring 2 des Zylinderrollenlagers ist sowohl an seiner äußeren Umfangsfläche 6 als auch an seinen Seitenflächen 7, 8 mit einer elektrischen Isolationsschicht 9 aus z. B. Oxidkeramik in einem Flammenspritz- oder Plasma-Spritzverfahren beschichtet, die einen hohen Isolationswert (z. B. > 200 V Gleichspannung) aufweist. Bei den Isolationsschichten handelt es sich um sehr dünne Schichten; sie sind lediglich der besseren Darstellung wegen in den Figuren dick gezeichnet.

Auf der in der Figur rechten Seite ist eine die Isolationsschicht 9 durchdringende Ausnehmung in Form einer Bohrung 10 in der Seitenfläche 7 des Lageraußenrings 2 angebracht, in die ein Stift 11 aus einem elektrisch leitenden Material eingedrückt ist. Er steht dadurch über seine Umfangsfläche mit dem Lageraußenring 2 in leitender Verbindung. Der Stift 11 ragt aus der Stirnfläche 7 des Lageraußenrings 2 heraus, und die Oberfläche seines herausragenden Bereiches ist ebenfalls mit einer Isolationsschicht 12 versehen. Durch die Isolationsschicht 12 führt ein mit dem Stift 11 verbundener elektrischer Anschluß 13 heraus, an den ein elektrischer Schutzwiderstand 14 angeschlossen ist. Die andere Seite des Schutzwiderstandes 14 kann an ein Maschinengehäuse, Lagergehäuse (Position 15 in Figur 2), Fahrgestell eines Schienenfahrzeuges o.ä. angeklemmt werden.

Im eingebauten Zustand ist der Lageraußenring 2 infolge seiner Isolationsschicht 9 und der Isolationsschicht 12 des Stiftes mit hohem Widerstandswert gegen die angrenzenden Metallteile isoliert. Ein vergleichsweise niederohmiger Strompfad besteht aber über den Schutzwiderstand 14, dessen Größe den Spannungs-Schwellenwert vorgibt, ab dem im Schadensfalle ein Strom aus z. B. dem Fahrgestell eines Schienenfahrzeugs über den Schutzwiderstand 14, den Stift 11, den Lageraußenring 2, die Zylinderrollen 3 und den Lagerinnenring 1 geleitet wird.

Anstelle des Schutzwiderstandes 14 kann selbstverständlich auch ein anderes elektrisches Bauelement oder eine Schaltung treten, die die gewünschte Schutzfunktion übernimmt. Als Beispiel sei hierzu ein elektrischer Schalter genannt, der von einem überspannungsabhängigen Signal getriggert wird und daraufhin den normalerweise gesperrten Strompfad öffnet.

Figur 2 zeigt ein weiteres Ausführungsbeispiel, bei dem zwar der Lageraußenring 2 wie im Beispiel der Figur 1 ausgeführt ist, der Stift 17 aber vollkommen mit einer Isolationsschicht 18 umgeben ist. Hier weist die Isolationsschicht 18 eine definierte Dicke mit eng toleriertem Widerstandswert auf und übernimmt die Funktion des Schutzwiderstandes. Liegt am Lagergehäuse 15 eine Spannung oberhalb des zulässigen Grenzwertes an, so fließt ein Kurzschlußstrom über den Stift 17 unter Überwindung der Isolationsschicht 18 des Stiftes 17 in den Lageraußenring 2. Bei dieser Ausführungsform sitzt der Stift in einer Ausnehmung 19 des Lagergehäuses 15 und sichert damit zusätzlich den Lageraußenring 2 gegen Wandern in Umfangsrichtung (Verdrehen).

Figur 3 schließlich zeigt ein Ausführungsbeispiel, in dem der Stift 20 nur in seinem in der Bohrung 10 des Lageraußenrings 2 sitzenden Oberflächenbereich mit einer Isolationsschicht 23 versehen ist. Der in der Ausnehmung 19 des Lagergehäuses 15 sitzende Teil des Stiftes 20 hat hingegen eine blanke Oberfläche und steht demnach in leitender Verbindung mit dem Lagergehäuse 15. Der Schutzwiderstand wird auch hier von der Isolationsschicht 23 des Stiftes 20 gebildet, die einen definierten Widerstandswert aufweist. Der Stift 20 übernimmt darüberhinaus - wie schon zu Figur 2 beschrieben - die Sicherung gegen ein Wandern des Lageraußenringes 2.

Das in den Ausführungsbeispielen als Stift dargestellte Teil kann auch aus einem Material bestehen, das selbst einen vorgegebenen elektrischen Widerstand bildet, wobei gegebenenfalls ein Bereich der Oberfläche des Stiftes isoliert ist, um die Kontaktflächen in der Ausnehmung des Lagerringes und der Ausnehmung des Gehäuses zu definieren. Die Ausnehmung zur Aufnahme des Teiles kann auch in der Umfangsfläche des Lagerringes statt in der Seitenfläche angeordnet sein. Schließlich ist die Erfindung auch nicht auf die in den Ausführungsbeispielen gezeigte Anwendung bei einem Lageraußenring beschränkt; es können stattdessen nur der Lagerinnenring oder auch Lageraußenring und Lagerinnenring mit einer Isolationsschicht versehen sein, und das Teil kann in der obenbeschriebenen Weise auch in einer Ausnehmung des Lagerinnenrings eingesetzt sein.

## Patentansprüche

1. Elektrisch isoliertes Wälzlager, bei dem mindestens ein Lagerring (2) auf seiner Sitzfläche (6) und wenigstens auf den zur Anlage an benachbarten metallischen Teilen gelangenden Bereichen seiner Seitenflächen (7) mit einer Isolationsschicht (9) versehen ist, dadurch gekennzeichnet, daß der Lagerring (2) eine die Isolationsschicht (9) durchdringende Ausnehmung (10) zum Einsetzen eines aus einem im Vergleich zur Isolationsschicht elektrisch leitfähigerem Material bestehenden Teiles (11, 17, 20) aufweist das mit einer Isolierung (12, 18, 23) versehen ist und/oder aus einem elektrischen Widerstandsmaterial besteht.

2. Wälzlager nach Anspruch 1, dadurch gekennzeichnet, daß das Teil (11, 17, 20) aus Metall besteht und ganz oder teilweise mit einer Isolationsschicht (12, 18, 23) versehen ist.

3. Wälzlager nach Anspruch 2, dadurch gekennzeichnet, daß das Teil (11) aus dem Lagerring (2) herausragend angeordnet und der herausragende Abschnitt mit einer Isolationsschicht (12) versehen ist.

4. Wälzlager nach Anspruch 2 oder 3, dadurch gekennzeichnet, daß die Isolationsschicht (18, 23) des Teiles (17, 20) einen definierten, im Vergleich zur Isolationsschicht (9) des Lagerringes (2) geringeren Widerstandswert gegen Stromdurchgang aufweist.

5. Wälzlager nach Anspruch 2 oder 3, dadurch gekennzeichnet, daß das Teil (11) mit einem elektrischen Anschluß (13) versehen ist.

6. Wälzlager nach Anspruch 5, dadurch gekennzeichnet, daß ein elektrisches Bauelement mit dem Teil (11) leitend verbunden ist.

7. Wälzlager nach Anspruch 6, dadurch gekennzeichnet, daß das elektrische Bauelement ein Widerstand (14) ist.

8. Wälzlager nach einem der vorhergehenden Ansprüche, dadurch gekennzeichnet, daß die Ausnehmung (10) in einer mit einer Isolationsschicht versehenen Seitenfläche (7) des Lagerringes (2) angeordnet ist.

9. Wälzlager nach einem der vorhergehenden Ansprüche, dadurch gekennzeichnet, daß das Teil aus einem Material definierten, im Vergleich zur Isolationsschicht (9) des Lagerringes (2) geringen Widerstandswertes besteht.

10. Wälzlager nach einem der vorhergehenden Ansprüche, dadurch gekennzeichnet, daß das Teil (11, 17, 20) zum Eingriff in eine entsprechende Ausnehmung (19) eines Lagergehäuses (15) bzw. Achszapfens vorgesehen ist und als Verdrehsicherung für den Lagerring (2) dient.

11. Wälzlager nach einem der vorhergehenden Ansprüche, dadurch gekennzeichnet, daß das Teil (11, 17, 20) ein Stift ist.

## Claims

1. An electrically insulated rolling bearing, in which at least one bearing ring (2) is provided with an insulating layer (9) on its seating surface (6) and at least on the zones of its lateral surfaces (7) coming into abutment with adjacent metal parts, characterised in that the bearing ring (2) has a recess (10) passing through the insulating layer (9) and serving for the insertion of a member (11, 17, 20) which consists of an electrically more conductive material compared with the insulating layer and which is provided with an insulation (12, 18, 23) and/or which consists of an electrical resistance material.

2. A rolling bearing according to Claim 1, characterised in that the member (11, 17, 20) consists of metal and is provided wholly or partly with an insulating layer (12, 18, 23).

3. A rolling bearing according to Claim 2, characterised in that the member (11) is arranged to project from the bearing ring (2) and the projecting portion is provided with an insulating layer (12).

4. A rolling bearing according to Claim 2 or Claim 3, characterised in that the insulating layer (18, 23) of the member (17, 20) has a given resistance value to current flow, which is lower compared with the insulating layer (9) of the bearing ring (2).

5. A rolling bearing according to Claim 2 or Claim 3, characterised in that the member (11) is provided with an electrical connection (13).

6. A rolling bearing according to Claim 5, characterised in that an electrical component is conductively connected to the member (11).

7. A rolling bearing according to Claim 6, characterised in that the electrical component is a resistor (14).

8. A rolling bearing according to any one of the preceding Claims, characterised in that the recess (10) is arranged in a lateral surface (7) of the bearing ring (2) provided with an insulating layer.

9. A rolling bearing according to any one of the preceding Claims, characterised in that the member consists of a material which has a given resistance value which is low compared with the insulating layer (9) of the bearing ring (2).

10. A rolling bearing according to any one of the preceding Claims, characterised in that the member (11, 17, 20) is provided for engagement in a corresponding recess (19) of a bearing housing (15) or journal, and serves as means for preventing relative rotation of the bearing ring (2).

11. A rolling bearing according to any one of the preceding Claims, characterised in that the member (11, 17, 20) is a pin.

## Revendications

1. Palier à roulement isolé électriquement dans lequel il est prévu au moins une bague de roulement (2) dont la surface de montage (6) et au moins les parties de ses faces latérales (7) venant en contact avec des parties métalliques voisines sont pourvues d'une couche isolante (9), caractérisé par le fait que la bague de roulement (2) comporte un évidement (10) qui traverse la couche isolante (9) et est destiné à la mise en place d'un élément (11, 17, 20) réalisé en un matériau électriquement meilleur conducteur par rapport à la couche isolante, lequel élément est pourvu d'une isolation (12, 18, 23) et/ou est réalisé en un matériau électriquement résistant.

2. Palier à roulement selon la revendication 1, caractérisé par le fait que l'élément (11, 17, 20) est en métal et est pourvu en totalité ou partiellement d'une couche isolante (12, 18, 23).

3. Palier à roulement selon la revendication 2, caractérisé par le fait que l'élément (11) fait saillie hors de la bague de roulement (2) et que la partie faisant saillie est pourvue d'une couche isolante (12).

4. Palier à roulement selon la revendication 2 ou 3, caractérisé par le fait que la couche isolante (18, 23) de l'élément (17, 20) présente une résistance définie au passage du courant plus faible par rapport à la couche isolante (9) de la bague de roulement (2).

5. Palier à roulement selon la revendication 2 ou 3, caractérisé par le fait que l'élément (11) est pourvu d'un moyen de connexion (13) électrique.

6. Palier à roulement selon la revendication 5, caractérisé par le fait qu'un composant électrique est relié de manière conductrice à l'élément (11).

7. Enroulement selon la revendication 6, caractérisé par le fait que le composant électrique est une résistance (14).

8. Palier à roulement selon l'une des revendications précédentes, caractérisé par le fait que l'évidement (10) est aménagé dans une surface latérale (7) de la bague de roulement (2) pourvue d'une couche isolante.

9. Palier à roulement selon l'une des revendications précédentes, caractérisé par le fait que l'élément est réalisé en un matériau présentant une résistance définie plus faible par rapport à celle de la couche isolante (9) de la bague de roulement (2).

10. Palier à roulement selon l'une des revendications précédentes, caractérisé par le fait que l'élément (11, 17, 20) est prévu pour être monté dans un évidement (19) adapté d'un corps de palier (15) ou d'un bout d'arbre et sert de moyen de freinage en rotation de la bague de roulement (2).

11. Palier à roulement selon l'une des revendications précédentes, caractérisé par le fait que l'élément (11, 17, 20) est une goupille.
